# Europäisches Patentamt

# European Patent Office

## Office européen des brevets

(19)

(11) Veröffentlichungsnummer: **0 137 977**
**A2**

(12) **EUROPÄISCHE PATENTANMELDUNG**

(21) Anmeldenummer: 84109963.3

(22) Anmeldetag: 22.08.84

(51) Int. Cl.⁴: **C 08 L 25/08, C 08 L 71/04**

(30) Priorität: 15.10.83 DE 3337629

(43) Veröffentlichungstag der Anmeldung: 24.04.85
Patentblatt 85/17

(84) Benannte Vertragsstaaten: **AT BE DE FR GB IT NL SE**

(71) Anmelder: **CHEMISCHE WERKE HÜLS AG, - RSP Patente / PB 15 - Postfach 13 20, D-4370 Marl 1 (DE)**

(72) Erfinder: **Ribbing, Wilfried, Dr., Heesternweg 20, D-4270 Dorsten 12 (DE)**
Erfinder: **Bartmann, Martin, Dr., Burgstrasse 35, D-4350 Recklinghausen (DE)**
Erfinder: **Bax, Hanns-Jörg, Dr., Lipper Weg 193, D-4370 Marl (DE)**
Erfinder: **Burzin, Klaus, Dr., Wellerfeidweg 164, D-4370 Marl (DE)** ·

(54) **Verfahren zum Herstellen thermoplastischer Formmassen enthaltend Polyphenylenether.**

(57) Die Erfindung betrifft ein Verfahren zum Herstellen von Polyphenylenether enthaltender Formmassen, indem man flüssigen Polyphenylenether, der, bezogen auf sein Trokkengewicht, 5 bis 25 Gewichtsprozent eines wasserfreien, viskositätsmindernden, organischen Lösemittels enthält, Styrolpolymerisate zufügt und ohne starke Scherkräfte bei Temperaturen von 150 bis 280 °C mischt.

EP 0 137 977 A2

## Verfahren zum Herstellen thermoplastischer Formmassen enthaltend Polyphenylenether

Gegenstand der Erfindung ist ein verbessertes Verfahren zum Herstellen thermoplastischer Formmassen, die
A 10 bis 95 Gewichtsprozent eines thermoplastischen Styrolpolymerisates, sowie
B 90 bis 5 Gewichtsprozent eines Polyphenylenethers und zusätzlich übliche Hilfs- und Zusatzstoffe enthalten, durch Mischen der flüssigen Komponente A mit der feuchten Komponente B und Entfernen flüchtiger Bestandteile aus der Mischung.

Thermoplastische Formmassen aus Styrolpolymerisaten und Polyphenylenethern sind bekannt (DE-B-16 94 257, US-PSS 4 128 602, 4 128 604, EP-A-48 154). Die daraus hergestellten Formkörper zeichnen sich durch gute Formbeständigkeit aus.

Üblicherweise werden die Formmassen erhalten durch Schmelzmischen der Komponenten in einem Extruder bei relativ hohen Temperaturen von 300 bis 320 °C. Die hohen Temperaturen und die hohen Scherkräfte, die bei einem solchen Verfahren anzuwenden sind, führen naturgemäß zu mechanisch und thermisch bedingter Produktschädigung, insbesondere an dem einzumischenden Styrolpolymerisat und besonders an der Kautschukkomponente bei Verwendung schlagfester Styrolpolymerisate.

Da bekanntlich bei der Polymerisation der zugrunde liegenden Phenole in Lösung gearbeitet wird und somit der Polyphenylenether in Lösung anfällt (US-PSS 3 257 357 und 3 257 358), hat es nicht an Versuchen gefehlt, ausgehend von diesen Lösungen entsprechende Formmassen herzustellen.

0137977
O.Z. 3950

So wird nach einem Verfahren der DE-B-2 107 935 in einem Lösungsmittel, das den Kautschuk und gegebenenfalls Polystyrol enthält, das monomere Phenol polymerisiert und aus der Lösung das Polymergemisch ausgefällt. Abgesehen von der aufwendigen Aufarbeitung fällt das Gemisch nicht in genügender Reinheit an.

Aus der DE-A-23 59 948 ist ein Verfahren bekannt, wobei aus einer Lösung, welche einen Polyphenylenether und gegebenenfalls andere Komponenten enthält, durch Sprühtrocknen das Lösemittel entfernt wird. Auch diese Arbeitsweise ist nicht befriedigend, da keine ausreichend reinen Produkte erhalten werden.

Aus der DE-A-31 31 440 (= EP-A 71 093) ist ein Verfahren bekannt, wobei Lösungen von Polyphenylenethern in organischen Lösungsmitteln gemeinsam mit Styrolpolymerisaten in einem Mehrstufenprozeß durch Verdampfen des Lösungsmittels von diesem befreit werden. Diese Arbeitsweise geht von relativ stark verdünnten Polyphenylether-Lösungen aus, die nur 10 bis 20 % Feststoffgehalt besitzen. Die aufkonzentrierte Lösung mit 15 bis 60 % Feststoffanteil wird anschließend mit einer Styrolpolymerisatschmelze oder einer Lösung des Styrolpolymerisats im gleichen Lösungsmittel versetzt.

Diese Arbeitsweise hat den Nachteil, daß sie mit recht hohen Lösungsmittelmengen arbeiten muß. Außerdem hat sich gezeigt, daß die Weichkomponente im schlagfesten Polystyrol geschädigt wird.

Es ist auch bekannt, analog der Kautschuktechnologie in einem Entgasungsextruder einer Lösung des Polyphenylenethers das Styrolpolymerisat zuzumischen und daraus die Formmasse zu gewinnen (CA-PS 1 063 761). Die Verweilzeit ist bei dieser Arbeitsweise im Extruder ebenfalls zu lang, so daß insbesondere das Styrolpolymerisat geschädigt wird.

In einer anderen bekannten Arbeitsweise wird die Formmasse erhalten durch Schmelzmischen des Styrolpolymerisates mit einem feuchten Polyphenylenether, der, bezogen auf sein Trockengewicht, bis zu 70 Gewichtsprozent Feuchtigkeit enthält, die zu mindestens 50 Gewichtsprozent aus Wasser besteht.

Auch bei dieser Arbeitsweise muß bei relativ hohen Temperaturen und mit einem Extruder gearbeitet werden, so daß die mechanische und thermische Schädigung der Formmasse nicht zu vermeiden ist (DE-A-31 06 746, EP-A-58 939).

Aufgabe der Erfindung ist es, ein verbessertes Verfahren bereitzustellen, welches ein Mischen der Komponenten in flüssiger Phase erlaubt, jedoch eine thermische und mechanische Schädigung der Formmasse vermeidet.

Die Lösung der Aufgabe gelingt, wenn man dem in flüssiger Form vorliegenden Polyphenylenether, der 5 bis 25 Gewichtsprozent, bezogen auf sein Trockengewicht, eines wasserfreien, viskositätsmindernden organischen Lösemittels enthält, das Styrolpolymerisat zufügt und das Mischen ohne starke Scherkräfte bei einer Temperatur von 150 bis 280 °C vornimmt.

Überraschenderweise ermöglicht das Verfahren das innige Vermischen der Polymeren in flüssiger Form bei vergleichbar niedriger Viskosität und unter Aufwand geringer Scherkräfte. Es ist überraschend, daß bei dem geringen Lösemittelanteil eine ausreichend niedrige Viskosität der Masse und eine gute Durchmischung in kurzer Zeit ohne Aufwand hoher Scherkräfte erreicht wird, ohne daß das thermisch und mechanisch empfindliche Styrolpolymerisat geschädigt wird.

Als Mischaggregate können also einfache statische Mischeinrichtungen anstelle von Extrudern produktschonend und energiesparend verwendet werden. Insbesondere kann also auch bei wesentlich niedrigeren Temperaturen von 150 bis 280 °C, insbesondere von 200 bis 250 °C, gearbeitet werden.

Zum Entfernen niedermolekularer Bestandteile aus der Formmasse können schonende Verdampfungseinrichtungen, wie Schaum-, Dünnschicht- oder Scheibenverdampfer verwendet werden.

Der Anteil des wasserfreien, viskositätsmindernden, organischen Lösemittels beträgt, bezogen auf das Trockengewicht des Polyphenylenethers, insbesondere 5 bis 18 Gewichtsprozent.

Geeignete viskositätsmindernde Lösemittel sind aromatische Kohlenwasserstoffe, wie Benzol, Toluol, Xylol, Ethylbenzol, Styrol, Methylethylbenzol, Methylstyrol, Chlorkohlenwasserstoffe, wie Chloroform, Tetrachlorethen, Chlorbenzol, Dichlorbenzol, Ether, wie Anisol, Ethylphenylether, Ester der 3-(3,5-Di-tert.-butyl-4-hydroxy)-phenyl-propionsäure oder Phthalate, organische Phosphate, wie Triphenylphosphat, Tris-(2,6-dimethylphenyl)-phosphat, Tris-(2,4,6-trimethyl-phenyl)-phosphat, insbesondere Toluol.

Der flüssige Polyphenylenether wird vorteilhaft erhalten aus entsprechend aufkonzentrierten reinen Lösungen des Polyphenylenethers, wie sie beim Herstellungsprozeß anfallen. Jedoch kann auch von festen Polyphenylenethern ausgegangen werden, die entsprechend mit dem viskositätsmindernden Lösemittel versetzt werden. Unter wasserfreien, viskositätsmindernden, organischen Lösemitteln werden solche verstanden, wie sie üblicherweise ohne besondere Trocknungsmaßnahme vorliegen, d. h. üblichen Wassergehalte bis zu 2 Gewichtsprozent beeinträchtigen nicht die

Arbeitsweise der Erfindung. Da der Polyphenylenether temperaturbeständiger ist als insbesondere das kautschukmodifizierte Styrolpolymerisat, wird das Styrolpolymerisat der konzentrierten Lösung des Polyphenylenethers als Schmelze oder als Granulat zugemischt, vorteilhaft als Schmelze.

Bei den Polyphenylenethern handelt es sich um Verbindungen auf der Basis von ortho-disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff, Wasserstoff, Halogene, Kohlen-wasserstoffreste, die kein $\alpha$-ständiges tert. Wasser-stoffatom besitzen, Halogenkohlenwasserstoffreste, Phenylreste und Alkoxireste tragen. So kommen infrage: Poly(2,6-dichlor-1.4-phenylen)-ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether, bevorzugterweise wird der Poly(2,6-dimethyl-1,4-phenylen)ether eingesetzt.

Die Polyphenylenether können z. B. in Gegenwart von komplexbildenden Mitteln wie Kupferbromid und Dibutylamin aus den Phenolen hergestellt werden. Bevorzugt werden solche Polyphenylenether, die eine Grenzviskosität zwischen 0,45 und 0,65 dl/g (gemessen in Chloroform bei 30 °C) besitzen (vgl. US-PSS 3 561 848, 3 219 625, 3 378 505 und deutsche Anmeldungen P 32 24 692.7, P 32 24 691.9, P 33 13 864.8, P 33 32 377.1).

Bei den Styrolpolymerisaten handelt es sich um Polymerisate von Styrol und/oder $\alpha$-Methylstyrol und deren Poly-meri...te mit Acrylnitril, mit Maleinsäureanhydrid und/oder dessen Estern, wobei der Gehalt an Comonomeren 10 Gewichtsprozent, bezogen auf das jeweilige Styrol, und bzw. $\alpha$-Methylstyrol enthaltende Copolymerisat nicht übersteigen soll.

Diese Polymerisate bzw. Copolymerisate können nach herkömmlichen Verfahren erhalten werden. So kann die Polymerisation des Styrols und/oder des $\alpha$-Methylstyrols bzw. deren Copolymerisation mit den oben erwähnten Comonomeren in Masse, Lösung, Suspension oder wäßriger Emulsion durchgeführt werden.

Bevorzugterweise wird als Styrol enthaltendes Polymerisat aber schlagfest modifiziertes Polystyrol verwendet.

Bei den schlagfest modifizierten Polystyrolen handelt es sich um Produkte, wie sie z.B. von A. Echte in der Angew. Makromolekularen Chemie 58/59 (1977), Seiten 175 bis 198 beschrieben sind.

Die Herstellung der schlagfest modifizierten Polymerisate kann nach einem beliebigen bekannten Verfahren vorgenommen werden.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk, z. B. Polybutadien, SBR-Kautschuk,
Polyisopren, Polyacrylate, EPDM, Ethylen-Vinylacetat-
Copolymere oder Polyisobutylen.

Die Polymerisationsverfahren sind hinreichend
bekannt und in Einzelheiten in der Literatur beschrieben.
Eine zusammenfassende Darstellung findet sich bei Amos,
Polym. Engng. Sci., 14 (1974), 1, S. 1 bis 11, sowie
in den US-Patentschriften 2 694 692 und 2 862 906,
auf die wegen weiterer Einzelheiten verwiesen werden
soll.

Es können auch Mischungen aus Polyphenylenethern und
sogenannten Blockcopolymerisaten aus Butadien und Styrol
bzw. aus Isopren und Styrol erhalten werden. Geeignete
Blockcopolymerisate sind z. B. solche vom Typ AB oder ABA,
wobei A einen Block aus Styrolpolymerisaten und B einen
Block aus Butadien- oder Isoprenpolymerisaten darstellt.
Hierbei können der Butadien- oder Isoprenanteil teilweise
oder auch vollständig hydriert sein. Geeignet sind auch
sogenannte Radialblockcopolymere, insbesondere solche
radiale Blockcopolymere mit einer multimodalen Blockverteilung. Die Herstellung solcher Blockcopolymerisate
ist z. B. in "Polymer Chemistry of Synthetic Elastomers",
Interscience Publishers, Vol. 23, Teil II (1969), S. 553
bis 559 sowie in der DE-OS 19 59 922, 25 50 226 und
25 50 227 beschrieben.

Die Mischungen aus den schlagzäh modifizierten Styrolpolymerisaten und Polyphenylenethern können außerdem weitere
Zusatzstoffe wie Pigmente, Farbstoffe, Füllstoffe, Flammschutzmittel, weitere verträgliche Polymere, Antistatika,
Stabilisatoren, Antioxidantien und Schmiermittel enthalten.

0137977

Diese Zusatzstoffe können bei der Herstellung der Formmassen in beliebiger Form, z. B. als Master-batch, als Aufschlämmung oder als Lösung an geeigneter Stelle in den Mischprozeß eingebracht werden. Radikalbildner können z. B. über die flüssige Polyphenylenether-Masse zugegeben werden. Bei der Vermischung der Schmelze von schlagzähem Polystyrol mit der flüssigen Polyphenylen-Masse kann dadurch eine Pfropfung von Polyphenylenether und schlagzähem Polystyrol erreicht werden, wobei Produkte mit verbesserter Lösungsmittel- und Chemikalienbeständigkeit erhalten werden.

Das Verfahren ist im besonderen auch für temperaturempfindliche schlagzähe Polystyrole, z. B. für Produkte mit hohen Kautschukanteilen, geeignet, da das Vermischen besonders produktschonend erfolgt, vergleichsweise niedrige Temperaturen benötigt werden und nur geringe Scherkräfte auftreten.

Vorzugsweise enthalten die Mischungen 20 bis 80 Gewichtsprozent des Styrolpolymerisates und entsprechend 80 bis 20 Gewichtsprozent Polyphenylenether.

Die folgenden Beispiele sollen die Erfindung erläutern, ohne sie einzuschränken.
Als schlagzähes Polystyrol (HIPS) wurde Polystyrol mit einem Kautschukanteil von 10 % und einer mittleren Größe der Weichphasenteilchen von 2,2 µm verwendet.
Die flüssige Polyphenylenether-Masse (PPE-Massen) wurden durch Aufkonzentration von PPE-Lösungen in Toluol hergestellt. Der Polypropylenether besaß jeweils den J-Wert von konzentrationsbezogene relative Viskositätsänderung = 53 ml/g, gemessen aus 0,5 %iger Lösung in Chloroform bei 25 °C, gemäß

$$J = \left(\frac{\eta}{\eta_0} - 1\right) \frac{1}{C} \quad [ml/g].$$

Polyphenylenether und schlagfestes Polystyrol wurden über zwei Einzugsöffnungen in eine Schmelzefördermaschine eindosiert mit nachgeschalteter Entgasungszone. Unter vermindertem Druck von 0,1 bar wurden Produkte mit <0,1 % flüchtigen Bestandteilen erhalten.

Die Versuchsbedindungen und die Ergebnisse sind in der folgenden Tabelle 1 zusammengefaßt (Beispiele 1 bis 6).

Tabelle 1

| Beispiel | Gewichtsteile in der Formmasse | | Flüssgkeit in 100 Tl. Misch- PPO feucht | | Misch-temp. °C | Eigenschaften der Formmasse | | |
|---|---|---|---|---|---|---|---|---|
| | Styrolpol. | PPO | Menge | Art | | Kerbschlagzahl | Schlagbiegevers. | 2 Teilchen-durchm. d. Weichphase μm |
| 1 | 65 | 35 | 9 | Toluol | 220 | 15 | 25 | 2,3 |
| 2 | 55 | 45 | 9 | Toluol | 220 | 12 | 23 | 2,1 |
| 3 | 45 | 55 | 9 | Toluol | 220 | 12 | 23 | 2,2 |
| 4 | 60 | 40 | 4 10 | Toluol Triphenyl-phosphat | 240 | 14 | 24 | 2,1 |
| 5 | 60 | 40 | 9 | Toluol | 220 | 13 | 23 | 2,4 |
| 6 | 60 | 40 | 9 | Toluol | 220 | 13 | 22 | 2,3 |
| A | 50 | 50 | 90 | Toluol | 250 | 10 | 20 | 4,7 |
| B | 50 | 50 | 26,6 6,7 | Wasser Methanol | 270 | 8 | 19 | 6,5 |
| C | 50 | 50 | 75 | Toluol | 250 | 10 | 20 | 4,5 |

1 nach DIN 53 453 $[KJ/M^2]$

2 nach DIN 53 753 $[KJ/m^2]$

0137977

Die Vergleichsversuche A, B, C wurden nach dem Stand der Technik vorgenommen.

Vergleichsbeispiel A  (gemäß DE-A-31 31 440)

10 Gewichtsteile Polypropylenether und 90 Gewichtsteile Toluol wurden bei 140 °C und 1 bar zu einer 20 %igen Lösung aufkonzentriert, 10 Gewichtsteile des gleichen schlagfesten Polystyrols wie in den Beispielen 1 bis 6 wurden zugemischt und bei 140 °C und 1 bar die Lösung auf 60 % aufkonzentriert.
In zwei weiteren Schritten (Vakuumkammer und Entgasungsextruder) wurde anschließend bei 250 °C und 0,2 bar der Lösemittelgehalt auf 1,0 % und dann auf 0,1 % gesenkt.

Vergleichsbeispiel B (gemäß DE-A-31 06 746)

75 Gewichtsteile Polyphenylenether, die, bezogen auf trockenen Polyphenylenether 50 Gewichtsprozent Flüssigkeit enthielten (87 % Wasser und 13 % Methanol), wurden mit 50 Gewichtsteilen des gleichen schlagfesten Polystyrols im Entgasungsextruder bei 270 °C gemischt.

Vergleichsversuch C (gemäß CA-PS 1 063 761)

In einer Lösung aus 25 Gewichtsteilen Polyphenylenether und 75 Gewichtsteilen Toluol werden bei 66 °C 25 Gewichtsteile schlagfesten Polystyrols gelöst. In einem Entgasungsextruder wird bei 250 °C das Lösemittel entfernt. Die Verweilzeit betrug das Dreifache gegenüber dem Mischvorgang der Erfindung.

Aus der Tabelle 1 ist zu entnehmen, daß bei dem Verfahren der Erfindung sowohl bessere mechanische Eigenschaften der Formmassen erreicht werden und auch die Weichphase, d. h. die Kautschukteilchen, im schlagfesten Polystyrol nicht geschädigt werden und auch nicht agglomerisiert sind.

Patentansprüche:

1. Verfahren zum Herstellen thermoplastischer Formmassen, die

A 10 bis 95 Gewichtsprozent eines thermoplastischen
Styrolpolymerisates sowie

B 90 bis 5 Gewichtsprozent eines Polyphenylenethers,
und zusätzlich übliche Hilfs- und Zusatzstoffe enthalten, durch Mischen der (flüssigen) Komponente A
mit der feuchten Komponente B und Entfernen flüchtiger
Bestandteile aus der Mischung,
dadurch gekennzeichnet, daß
dem in flüssiger Form vorliegenden Polyphenylenether,
der 5 bis 25 Gewichtsprozent, bezogen auf sein
Trockengewicht, eines wasserfreien, viskositätsmindernden organischen Lösemittels enthält, das
Styrolpolymerisat zugefügt und das Mischen ohne starke
Scherkräfte bei einer Temperatur von 150 bis 280 °C
vorgenommen wird.

2. Verfahren nach Anspruch 1,
dadurch gekennzeichnet, daß
in dem flüssigen Polyphenylenether 5 bis 18 Gewichtsprozent, bezogen auf sein Trockengewicht, des wasserfreien, viskositätsmindernden Lösemittel enthalten
sind.

3. Verfahren nach den Ansprüchen 1 und 2,
dadurch gekennzeichnet, daß
als wasserfreie, viskositätsmindernde organische
Lösemittel, aromatische Kohlenwasserstoffe und/oder
organische Phosphate verwendet werden.